# EUROPEAN PATENT APPLICATION

(11) **EP 2 631 418 A2**
(43) Date of publication of application: **28.08.2013**
(21) Application number: 13156407.2
(22) Date of filing: 22.02.2013
(51) Int. Cl.: E21B 23/03, E21B 34/10, E21B 43/12

(54) **External pressure testing of gas lift valve in side-pocket mandrel**

(30) Priority: 24.02.2012 US 201261602721 P
(71) Applicant: Weatherford/Lamb, Inc., Houston, TX 77056 (US)
(72) Inventor: Rae, Colin Gordon, Dyce Aberdeen AB21 0BG (GB)
(74) Representative: Shanks, Andrew

(57) **Abstract**

A side-pocket mandrel is used for a gas lift system. The mandrel has two external ports, which can use external check valves when deployed downhole. Before installing the mandrel, operators preferably pressure test the interface of a gas lift valve in the pocket of the mandrel. Internal pressure testing is performed. The mandrel, however, is suited for external-pressure testing, which is impractical for other types of side-pocket mandrels. In the external pressure test, a pressure test line is coupled to the inlet port on the mandrel, which is already threaded in a reinforced area of the mandrel to receive a check valve. The other inlet port is closed off with a plug or with a check valve. When external pressure is applied with the test line, operators can determine if the gas lift valve is properly seated (*i.e*., whether the latch is properly engaged in the pocket). Operators can also determine if the seals between the gas lift valve and the pocket are capable of holding external pressure.

## Description

### CROSS-REFERENCE TO RELATED APPLICATIONS

This application claims the benefit of U.S. Provisional Appl. 61/602,721, filed 24-FEB-2012, which is incorporated herein by reference in its entirety.

### FIELD OF THE DISCLOSURE

The subject matter of the present disclosure is directed to artificially lifting fluid from a wellbore using a gas lift system, and more particularly, to testing the installation of gas lift valves in mandrels of a gas lift system.

### BACKGROUND OF THE DISCLOSURE

Operators use gas lift valves in side-pocket mandrels to lift produced fluids in a well to the surface. The gas lift valves allow gas from the tubing annulus to enter the tubing through the valve, while preventing flow from the tubing to the annulus.

### 1. Gas Lift System

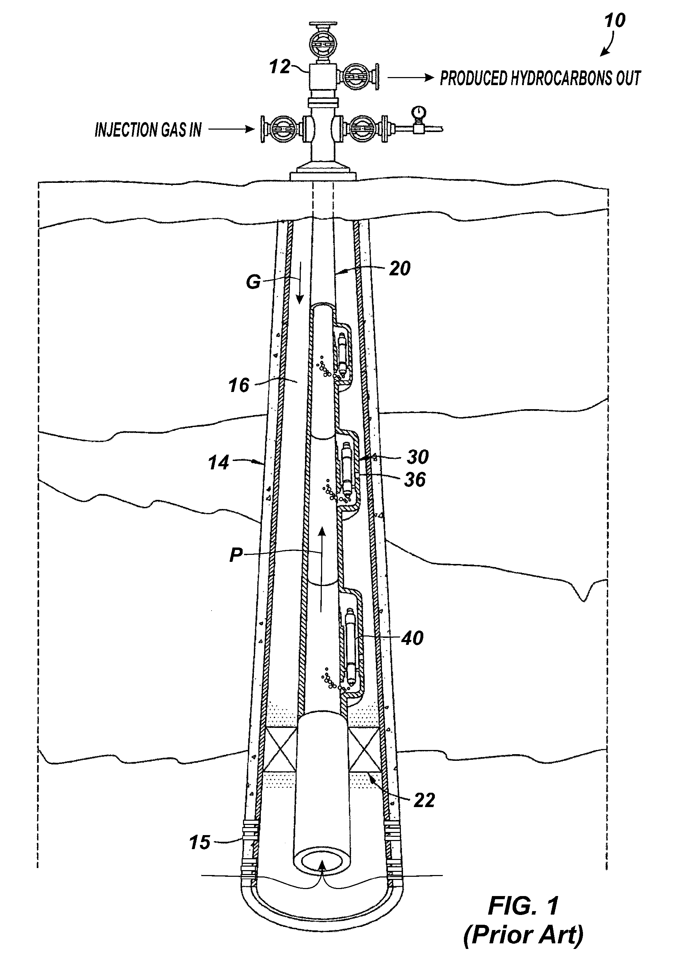

A typical gas lift system 10 illustrated in Figure 1 has a wellhead 12 atop a casing 14 that passes through a formation. A tubing string 20 positioned in the casing 14 has a number of side-pocket mandrels 30 and a production packer 22. Downhole, the production packer 22 forces produced fluid entering casing perforations 15 from the formation to travel up through the tubing string 20 and also keeps the gas flow in the annulus 16 from entering the tubing string 20. To conduct a gas lift operation, operators install gas lift valves 40 into the side-pocket mandrels 30 (before deployment or by slickline after deployment). One suitable example of a gas lift valve is the McMurry-Macco^{®} gas lift valve available from Weatherford International. (McMURRY-MACCO is a registered trademark of Weatherford/Lamb, Inc.)

With the valves 40 installed, compressed gas G from the wellhead 12 is injected into the annulus 16 between the production tubing string 20 and the casing 14. In the side-pocket mandrels 30, the gas lift valves 40 then act as one-way valves by allowing gas flow from the annulus 16 to the tubing string 20 and preventing gas flow from the tubing string 20 to the annulus 16. In this way, the installed gas lift valves 40 regulate the flow of gas from the annulus 16 to the tubing string 20.

The injected gas G passes down the annulus 16 until it reaches the side-pocket mandrels 30. Entering the mandrel's ports 35, the gas G must first pass through the gas lift valve 40 before it can pass into the tubing string 20. Once in the tubing string 20, however, the gas G can then rise to the surface, lifting produced fluid in the tubing string 20 in the process. To prevent fluid in the tubing string 20 from passing out the valve 40 to the annulus 16, the gas lift valve 40 can use a check valve that restricts backflow.

### 2. Side-Pocket Mandrel

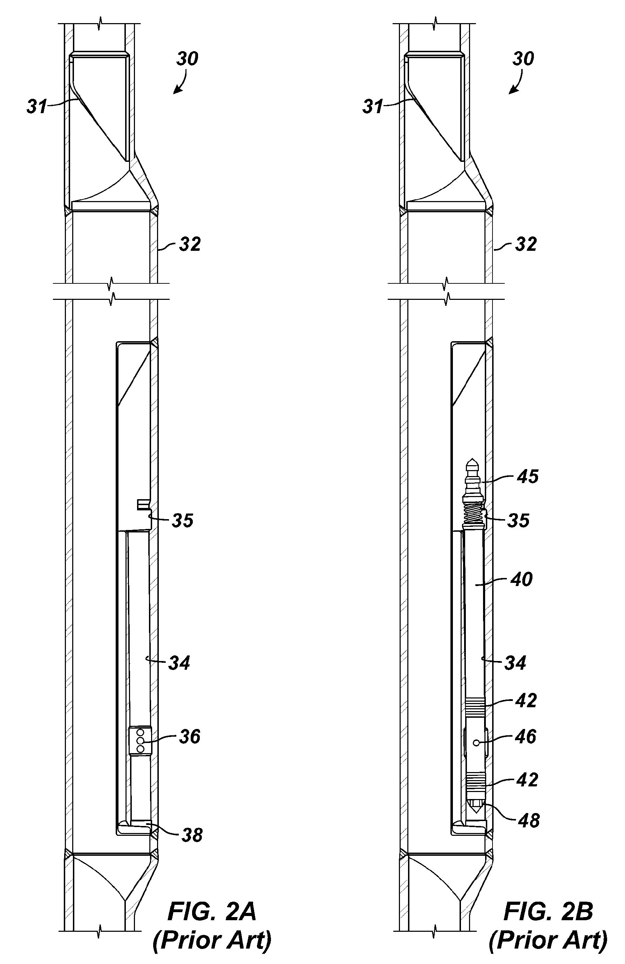

Figures 2A-2B show a prior art side-pocket mandrel 30, which can be a McMurry-Macco^{®} side-pocket mandrel, such as the SM-2 or SFO-2 series available from Weatherford International. Figure 2A shows the mandrel 30 by itself, and Figure 2B shows a gas lift valve 40 installed therein. The mandrel 30 has a side pocket 34 in an offset bulge 32. The pocket's upper end has a seating profile 35 for engaging a latch 45 of the gas lift valve 40, while the pocket's other end 38 may be open. Side ports 36 in the mandrel's pocket 34 communicate with the surrounding annulus (16) outside the mandrel 30 and allow for fluid communication during gas lift operations.

As shown in Figure 2B, the gas lift valve 40 can install in the mandrel 30 manually during initial installation at the surface so that the mandrel 30 with installed gas lift valve 40 can be run downhole together without the need for a slickline operation. However, the gas lift valve 40 may also be lowered down the tubing string (20) to the side-pocket mandrel 30 already installed downhole using a slickline operation. Either way, the seals 42 of the installed valve 40 can straddle and packoff the mandrel's ports 36. The mandrel 30 may also have an orienting sleeve 31 for facilitating slickline operations and for properly aligning the gas lift valve 40 within the pocket 34.

Shown installed in Figure 2B, the gas lift valve 40 has inlet ports 46 to receive inlet gas from the mandrel's ports 36. At its uphole end, the gas lift valve 40 has the latch 45 for engaging in the mandrel's seating profile 35. At its downhole end or nose, the gas lift valve 40 has outlet ports 48 for the injected gas to leave the valve 40 and enter the tubing string (20).

### 3. Pressure-Operated Valve

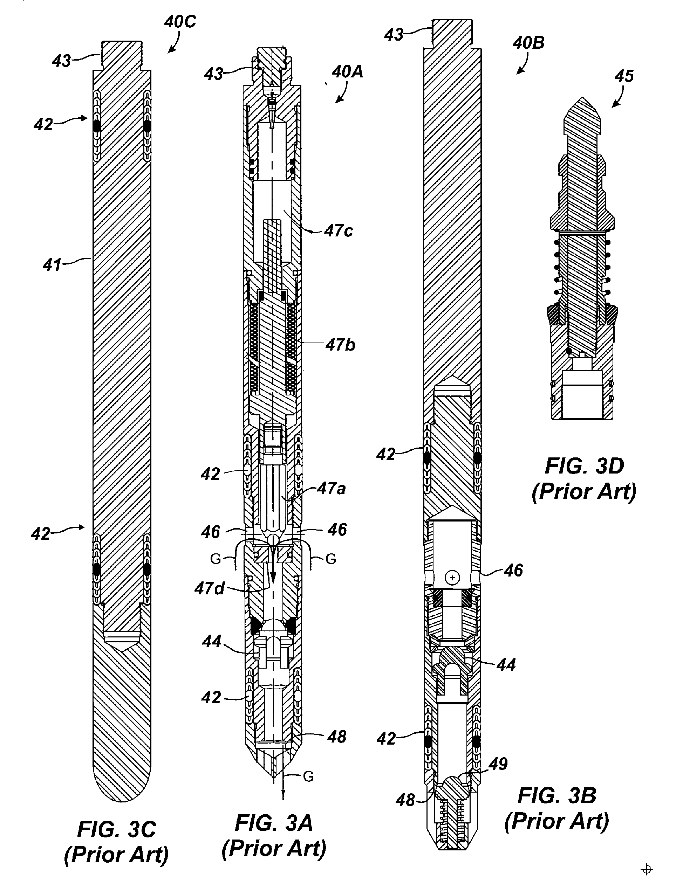

One type of gas lift valve used in the art for a wireline-retrievable system is shown in Figure 3A. This gas lift valve 40 is a pressure-operated gas lift valve, such as an Injection Pressure Operated (IPO) valve and a Production Pressure Operated (PPO) valve. As shown, the IPO valve 40A has upper and lower seals 42 separating inlet ports 46, which communicate with injection gas ports 48. A valve piston 47a is biased closed by a gas charge dome 47c and a bellows 47b. At its distal end, the valve piston 47a moves relative to a valve seat 47d at the inlet ports 46 in response to pressure on the bellows 47b from the gas charge dome 47c.

A predetermined gas charge applied to the dome 47c and bellows 47b, therefore, biases the valve piston 47a against the valve seat 47d and close the valve ports 46. Other than a bellows and gas charge dome, the IPO valve 40A can use other mechanisms to provide bias or preset pressure operation, including, for example, springs, fracturable elements, shearable elements, etc.

A check or dart valve 44 in the IPO valve 40A can be positioned downstream of the valve piston 47a, valve seat 47d, and valve ports 46, and this check valve 44 can keep flow from the tubing string (20) from going through the injection ports 48 and back into the annulus (16) through the valve ports 46. Yet, the check valve 44 allows injected gas from the valve ports 46 to pass out the gas injection ports 48.

### 4. Orifice Valve

Another type of gas lift valve used in the art for a wireline-retrievable system is shown in Figure 3B. This gas lift valve 40 is an orifice valve that merely permits flow from the annulus to the tubing and preventing flow from the tubing to the annulus. Thus, this orifice valve 40B does not contain external pressure because it essentially does not restrict flow from the annulus to the tubing. As shown, the orifice valve 40B has upper and lower seals 42 separating the inlet ports 46, which communicate internally with the outlet ports 48. A dart valve 44 operates as a check valve, permitting fluid flow from the inlet ports 46 to the outlet ports 48 and preventing reverse fluid flow. No present bias or charge is used. Again, a check valve 49 can be positioned downstream from the dart valve 44 and can keep flow from the tubing string (20) from going through the outlet ports 48 and back into the annulus (16) through the inlet ports 46. Yet, the check valve 49 allows injected gas from the inlet ports 46 to pass out the outlet ports 48.

### 5. Dummy Valve

Yet another type of gas lift valve used in the art for a wireline-retrievable system is shown in Figure 3C. This gas lift valve 40 is a dummy valve, which is effectively a plug and not a valve. As shown, the dummy valve 40C has the external geometry of a typical gas lift valve and has the same upper and lower seals 42. However, the dummy valve 40C includes no internal passages, valves, or the like that allow flow through the valve's body 41. Instead, the dummy valve 40C plugs off the openings in the mandrel (50) in which the valve 40C installs.

In a common application of the gas lift system 10, for example, operators install dummy valves 40C in the side-pocket mandrels (*e.g*., 30:Fig. 2A) so the side-pocket mandrels (30) can be deployed on the tubing string in a well and provide tubing/casing integrity without specific flow function. Later during the life of the well, flow through the side-pocket mandrels (30) may be needed, and operators can replace the dummy valves 40C by active gas lift valves (*i.e.*, IPO valves 40A, orifice valves 40B, etc.) using downhole wireline techniques.

### 6. Latch

Figure 3D shows one type of latch 45 typically used on a wireline-retrievable gas lift valve, such as the valves 40A-C in Figures 3A-3C. This latch 45 attaches to an upper end 43 of the valves 40A-C so that the valves 40A-C can be retrieved via wireline from the side-pocket mandrel (*e.g*., 30:Fig. 2A).

### 7. Discussion

As can be seen above, when the side-pocket mandrel 30 is used for gas lift, the gas lift valve 40 is inserted into the pocket 34 of the mandrel 30 to control the passage of gas from the annulus (16) to the tubing string (20). The gas lift valve 40 is connected to the latch 45 that fits into the profile 35 at the top of the pocket 34 to hold the valve 40 in place. The valve 40 itself has packing and seals 42 that interface inside the pocket 34 of the mandrel 30 to prevent flow between the pocket 34 and the valve 40 and to direct flow instead through the internal control features of the valve 40.

As shown in Figure 2A, the standard side-pocket mandrel 30 used in the industry for gas lift has a flow path from the annulus to the tubing string (20) through side ports 36. To test the sealing integrity, operators can perform internal pressure tests of the valves 40 installed in the mandrels 30 before and after deployment. To do this before deployment, operators install a valve 40 in the mandrel 30 and apply pressurized fluid internally to determine whether the valve 40 properly seats and seals in the pocket 34 of the mandrel 30. If the valve 40 is not properly installed, pressure losses will occur because the valve 40 has not properly sealed off the side ports 36. By detecting the pressure loss, operators can determine what has caused the improper seating of the valve 40 or containment of pressure.

Unfortunately, the side-pocket mandrels 30 do not readily allow external pressure testing to be performed on the valve/mandrel pocket interfaces before deployment. As shown in Figure 2A, the side ports 36, which usually number 6 or 8, are built into a thin wall of the side-pocket mandrel 30 in a direction perpendicular to the centerline of the mandrel 30, which makes isolating these ports for external pressure testing particularly difficult. Operators would have to mount the mandrel 30 with the installed valve 40 inside a large pressure-containing chamber to apply external pressure to the assembly. As expected, this form of testing is prohibitively slow, expensive, and cumbersome and is even more so when performed in the field.

However, several potential problems may not be detected if the interface between the valve 40 and the mandrel's pocket 34 is not externally pressure tested. Two possible problems are not detected. First, the internal pressure test does not indicate whether the valve 40 is completely set in the pocket 34 and may merely indicate that the valve 40 is set enough to prevent internal fluid pressure from escaping through the mandrel 30. For example, the seals 42 may be working properly to contain internal pressure, but the valve 40 may not be properly set (*i.e*., not fully landed in the pocket 34). In this instance, the latch 45 may not be fully set into its mating profile 35 in the mandrel 30 and may not hold the valve 40 in place if a mechanical or pressure force is applied to the valve/latch assembly.

Second, the internal pressure test does not indicate whether the external-pressure containing seals (*i.e*., the elements for holding pressure from the annulus) are actually capable of holding pressure. For example, the external-pressure containing seals may have been damaged when the valve 40 was inserted into the pocket 34 while the internal-pressure containing seals remain undamaged.

In both of these cases, the internal pressure testing typically used may not reveal the problems. If undetected before deployment, operators may not discover the problems until after the mandrel 30 is run in the well and is externally tested downhole with the valve 40 installed. By then, remedies to the problems are very expensive and complicated. For example, it is possible for an improperly installed gas lift valve 40 to pop out of its associated mandrel 30 during operations, such as when operators set a hydrostatic-set packer downhole.

The subject matter of the present disclosure is directed to overcoming, or at least reducing the effects of, one or more of the problems set forth above.

### BRIEF DESCRIPTION OF THE DRAWINGS

Fig. 1 illustrates a gas lift system according to the prior art.

Fig. 2A shows a prior art side-pocket mandrel for the gas lift system.

Fig. 2B shows a gas lift valve installed in the mandrel of Fig. 2A.

Fig. 3A illustrates a cross-sectional view of a pressure-operated gas lift valve according to the prior art.

Fig. 3B illustrates a cross-sectional view of an orifice gas lift valve according to prior art in cross-section.

Fig. 3C illustrates a partial cross-section of a dummy valve according to the prior art.

Fig. 3D illustrates a cross-sectional view of a latch for the prior art gas lift valve.

Fig. 4 illustrates a gas lift system according to the present disclosure.

Fig. 5A illustrates a side-pocket mandrel in cross-section for the gas lift system.

Fig. 5B illustrates another cross-sectional view of the disclosed side-pocket mandrel.

Fig. 6A illustrates a gas lift valve installed in the disclosed side-pocket mandrel, which is shown in partial cross-section.

Fig. 6B illustrates a detailed view of the gas lift valve installed in the disclosed side-pocket mandrel with an external check valve disposed thereon.

Fig. 7 schematically illustrates an internal pressure test operation of a gas lift valve installed in a side-pocket mandrel according to the present disclosure.

Fig. 8A schematically illustrates an external pressure test operation of a gas lift valve installed in a side-pocket mandrel according to the present disclosure.

Fig. 8B illustrates an end view of the side-pocket mandrel, showing external connections for the external pressure test.

Fig. 8C illustrates a typical packing seal used on a gas lift valve.

Fig. 9 schematically illustrates another form of external pressure test operation according to the present disclosure when an orifice valve is installed in a side-pocket mandrel.

Figs. 10A-10B illustrate other types of side-pocket mandrels, which can be subjected to the external pressure testing disclosed herein.

### DETAILED DESCRIPTION

As noted previously, gas lift valves positioned in side-pocket mandrels may not be completely installed, and internal pressure tests may not be capable of revealing that the valves are not completely installed in the mandrels before deployment due to the difficulties in implementing such a test in the field or even in a workshop. To actually test the installation of the gas lift valves in the mandrel, an external pressure test is preferably performed. Currently, operators do not externally pressure test side-pocket mandrels before deployment. To that end, a system and method are disclosed herein that allow operators to perform an external pressure test and evaluate the installation of gas lift valves in the side-pocket mandrels.

Before discussing how external pressure testing can be performed to achieve the purposes disclosed herein, discussion first turns to a gas lift system, gas lift valve, and side-pocket mandrel according to the present disclosure.

### A. Gas Lift System

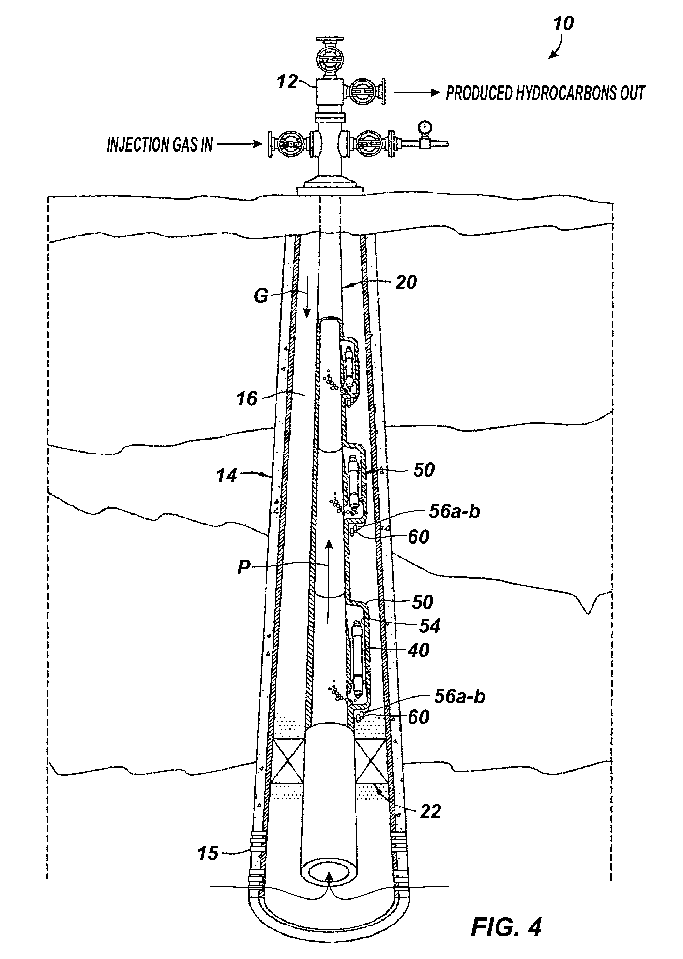

Figure 4 shows a gas lift system 10 according to the present disclosure. Many details of the system 10 are similar to those discussed above. Therefore, like reference numerals are used, and some of the related details are not repeated here. As before, the system 10 has a tubing string 20 positioned in the casing 14, and the tubing string 20 has a number of side-pocket mandrels 50 and a production packer 22. Gas lift valves 40 install into the side pockets 54 of the mandrels 50 to conduct gas lift operations.

This gas lift valve 40 can be a pressure-operated valve, such as the valve 40A disclosed above in Figure 3A. Again, one suitable example of such a pressure-operated gas lift valve 40A is the McMurry-Macco^{®} gas lift valve available from Weatherford International. As will be appreciated, the system 10 can use other types of gas lift valves, including those having bellows, springs, pressure domes, and the like. Additionally, orifice valves 40B (as in Fig. 3B) and dummy valves 40C (as in Fig. 3C) can be installed into the side-pocket mandrels 50.

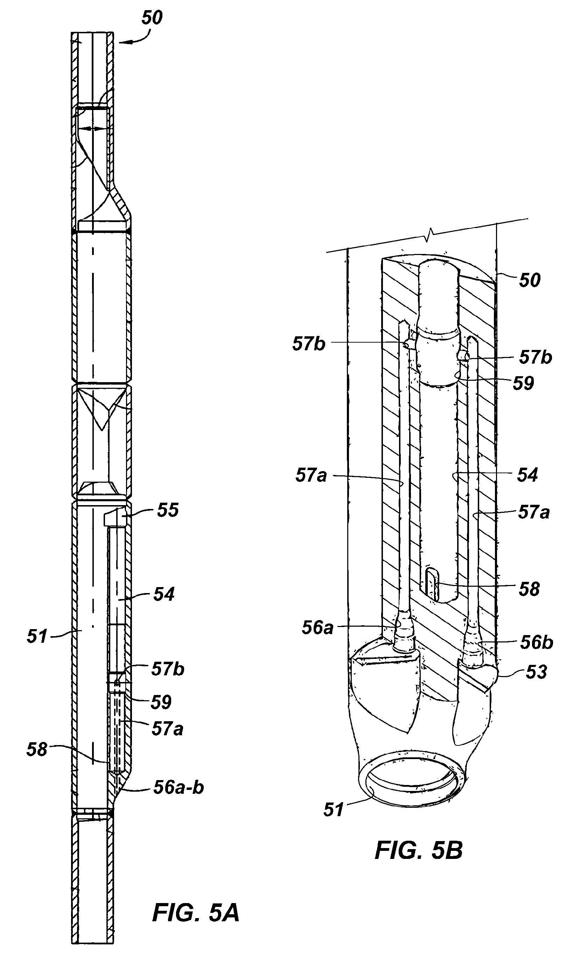

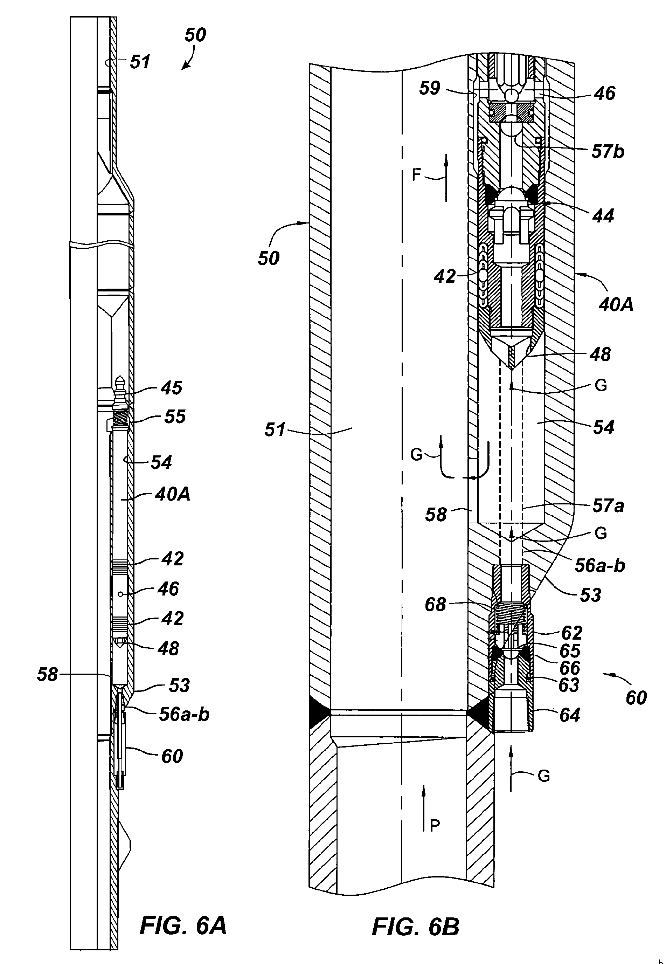

The gas lift valves 40 in the current completion install in side-pocket mandrels 50 having lower ports 56a-b, which may or may not having check valves 60. The side-pocket mandrel 50 is shown in more detail in Figures 5A-5B and can be similar to a Double-Valved external (DVX) gas-lift mandrel, such as available from Weatherford International and as disclosed in U.S. Pat. No. 7,228,909 incorporated herein by reference in its entirety. A gas lift valve 40 is shown installed in the side-pocket mandrel 50 in Figures 6A-6B.

As best shown in Figures 5A-5B, the mandrel 50 has a side pocket 54 in an offset bulge from the mandrel's main passage 51. This pocket 54 holds the gas lift valve 40 as shown in Figure 6A-6B. The pocket's upper end has a seating profile 55 for engaging a locking mechanism 45 of the gas lift valve 40, while the pocket's other end has an opening or slot 58 communicating with the mandrel's main passage 51.

Lower ports 56a-b in the mandrel's pocket 54 communicate with the surrounding annulus (16: Fig. 4) and allow for fluid communication during gas lift operations. Although two such ports 56a-b are shown, the disclosed mandrel 50 for the purposes disclosed herein may have one or more such ports 56. As shown in Figures 5A-5B, these ports 56a-b communicate with side passages 57a on either side of the pocket 54. When these side passages 57a reach a seating area 59 of the pocket 54, the side passages 57a communicate with the pocket 54 via transverse passages 57b. In this way, fluid entering the ports 56a-b can flow along the side passages 57a to the transverse passages 57b and into the seating area 59 of the pocket 54 where portion of the gas lift valve 40 positions. The passages 57a-b facilitate manufacture; other configurations could be used.

As shown in Figure 6A-6B, the gas lift valve 40 has packings or seals 42 that straddle and packoff the exit of the transverse passages 57b in the mandrel's seating area 59. This is where inlet ports 46 of the gas lift valve 40 position to receive the flow of gas.

In the current arrangement, the ports 56a-b on the mandrel 50 can receive external check valves 60 that dispose in the ports 56a-b as shown in Figures 6A-6B. The check valves 60 allow gas G flow from the annulus (16) into the mandrel's ports 56a-b, but prevent fluid flow in the reverse direction to the annulus (16). In general, the check valve 60 has a tubular body having two or more tubular members 62, 64 threadably connected to one another and having an O-ring seal 63 therebetween.

The upper end of the valve 60 threads into the one of the mandrel's port 56a-b, while the lower end can have female threads for attaching other components thereto (such as a test line for an external pressure test as detailed below). Internally, a compression spring 68 or the like biases a check dart 65 in the valve's bore against a seat 66. To open the one-way valve 60, pressure from the annulus (16) moves the check dart 65 away from the seat 66 against the bias of the spring 68. If backflow occurs, the dart 65 can seal against the seat 66 to prevent fluid flow out the check valve 60.

### B. Operations

Having an understanding of the gas lift system 10, side-pocket mandrels 50, gas lift valves 40, and check valves 60, discussion now turns to how internal pressure testing, external pressure testing, and gas lift operations can be performed with the system.

As is known, operators perform a number of inspections and tests prior to installing equipment at a well site. Part of these procedures include securing the latch 45 to the gas lift valve 40 and installing the gas lift valve 40 in the side-pocket mandrel 50 to ensure proper installation. To validate pressure integrity, operators pressure test the assembled valve 40 and side-pocket mandrel 50 using the lowest pressure-testing limit of the side-pocket mandrel 50 or gas lift valve 40. Operators also perform an internal drift test and the like. Once these and other procedures are completed, operators label the side-pocket mandrel 50 with appropriate information so the mandrel 50 can be properly installed in the well at the wellsite.

### 1. Internal Pressure Testing Operation

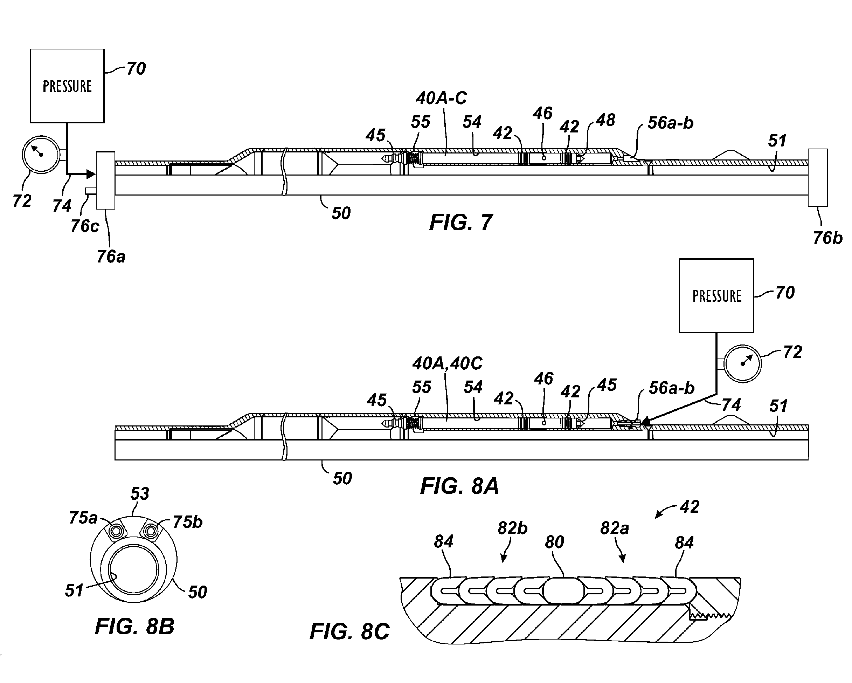

To assess how the gas lift valves 40 are installed in the side-pocket mandrels 50, operators can perform an internal pressure test before deployment. In this test schematically shown in Figure 7, operators install a gas lift valve 40 in the mandrel 50 and apply pressure internally in the mandrel 50. The internal pressure test can be used when any of the various gas lift valves 40 disclosed herein are installed in the mandrel 50 so that the valve 40 can include a pressure-operated valve 40A (Fig. 3A), an orifice valve 40B (Fig. 3B), a dummy valve 40C (Fig. 3C), or other type of gas lift valve.

To conduct the test, pressure from a pressure source 70 of a desired fluid medium is applied via a pressure test line 74 at one end to the interior bore 51 of the mandrel 50. The test line 74 can connect to a ported plug 76a or the like sealing the uphole end of the mandrel 50. The opposing end of the mandrel 50 can be closed by another plug 76b. A bleed port 76c can be installed at either plug 76a-b.

As will be appreciated, the fluid medium used for the test and the pressure applied can depend on the implementation. In general, the fluid medium used is commonly water or treated water, but can be, in very unusual instances, some form of oil or inert gas such as nitrogen. The pressure applied will vary according to the requirements for the well.

A special set up is not required to conduct such an internal pressure test. Instead, the methodology used can be similar to that used for testing other individual well components, such as packers and safety valves. To pass the test, a limited visible change must be evidenced in the pressure gauge 72 or other sensor connected to the test line 74.

During the test, for example, the applied pressure inside the mandrel 50 can act against the valve's seals 42 engaged in the pocket 54. For example, the applied pressure can enter between the valve 40 and the pocket 54 at the uphole end where the latch 45 is located and at the downhole end where the port or slot 58 is located. The applied pressure can then test the integrity of these seals 42, which are intended to contain the internal pressure and prevent back flow. The applied pressure also tests the internal valves (*e.g*., 44 and 49 of Fig. 3A) of the gas lift valve 40, which are intended to prevent fluid flow from inside the mandrel 50 to pass out of the inlet ports 56a-b. As shown here, the inlet ports 56a-b may lack the check valves (60a-b), although they could be installed for the test.

The test determines if the internal-pressure containing seals and/or valves of the assembly can hold the requisite pressures for downhole use. For example, the external packoff seals 42 on the gas lift valve 40 may allow fluid pressure to pass between the exterior of the valve 40 and the interior of the pocket 54, bypassing the internal dart valve (44) of the gas lift valve 40 and passing out the outlet ports 56a-b. Also, the internal dart valve (44) may not be operating properly if the packoff seals 42 are not compromised. Either way, if pressure loss occurs as measured by the pressure gauge 72 or the like, operators can determine and remedy the cause before actually deploying the mandrel 50 and the valve 40 downhole.

### 2. External Pressure Testing Operation

To better assess how the gas lift valves 40 install in the side-pocket mandrels 50, operators also perform an external pressure test before deployment. Depending on the type of valve 40 installed in the side-pocket mandrel 50, one of two forms of external pressure testing may be performed.

### a. First Form of External Pressure Testing

A first form of external pressure testing is schematically illustrated in Figure 8A. A gas lift valve 40 as discussed herein installs in the side-pocket mandrel 50. In this first form of the test, the gas lift valve 40 used is one that provides some form of pressure containment in the valve 40 in the direction of the external pressure test. As noted herein, various types of gas lift valves provided some degree (predetermined for the specific application) of pressure containment from the annulus to the tubing, including, but not limited to, a pressure-operated valve 40A (Fig. 3A), a dummy valve 40C (Fig. 3C), a Shearable or Fracturable valve, or other preset valve.

As noted above, the side-pocket mandrel 50 for use herein differs from the industry standard mandrel (*e.g*., 30: Fig. 2A) in that the disclosed mandrel 50 has two entry ports 56a-b, which communicate the well annulus to the mandrel's pocket 54. Additionally, as shown in Figures 8A-8B and elsewhere, the ports 56a-b are defined in a thick area 53 suitable for threading a pressure coupling 75a and/or a plug 75b, and the ports 56a-b are defined parallel to the centerline of the mandrel 50 and pocket 54, facilitating arrangement of test equipment. Due to this configuration of the entry ports 56a-b, operators can readily mount (as shown in Figure 8B) a threaded plug 75b or one of the check valves 60a-b onto one of the ports 56a-b and can mount a pressure test line 74 with a fitting 75a onto the other port 56a-b (or even onto an attached check valve 60 threaded into this other port 56a-b).

To conduct the test, operators apply pressure from a pressure source 70 through the pressure test line 74 to test the setting of the gas lift valve 40A, 40C in the mandrel's pocket 54. Again, as will be appreciated, the fluid medium used for the test and the pressure applied depend on the implementation.

As noted above, the internal pressure test does not indicate whether the valve 40A, 40C is completely set in the pocket 54 and may merely indicate that the valve 40A, 40C is set enough to prevent internal fluid pressure from escaping through the mandrel 50. For example, the seals 42 may be working properly to contain internal pressure, but the valve 40A, 40C may not be properly set (*i.e.,* not fully landed in the pocket 54). In this instance, the latch 45 may not be fully set into its mating profile 55 in the mandrel 50 and may not hold the valve 40A, 40C in place if a mechanical force or hydraulic pressure is applied to the assembly of the valve 40A, 40C and latch 45. By applying the external pressure test, operators can therefore determine whether the valve 40A, 40C is properly set in the side pocket 54 of the mandrel 50 by observing whether the valve 40A, 40C unseats under the hydraulic pressure.

Secondly, the internal pressure test as noted above does not indicate whether the external-pressure containing features of the seals 42 for holding pressure from the annulus are actually capable of holding pressure. To help illustrate the sealing features, reference is concurrently made to Figure 8C, which shows a typical packing seal 42 used on a gas lift valve. The typical packing seal 42 uses packing stacks 82a-b, and each stack 82a-b use a number of individual seal rings 84 (sometimes known as chevrons). Each of these seal rings 84 is capable of holding pressure in only one direction, and the rings 84 are arranged in the same direction in each stack 82a-b. In the seal 42, the two packing stacks 82a-b are arranged opposing one another and have a non-pressure containing ring 80 disposed between them. Thus, one stack 82a on the seal 42 holds external pressure (*i.e*., from the direction of the end of the valve to its mid-length), while the other stack 82b holds internal pressure (*i.e*., from the direction of the valve's mid-length to its ends).

Thus, the internal pressure testing described above can indicate that the internal pressure containing features (*i.e.,* the internal packing stacks 82b) of the seals 42 can contain internal pressure, but cannot indicate that the external pressure containing features (*i.e*., the external packing stacks 82a) of the seals 42 can contain external pressure. For example, the external-pressure containing features of the seals 42 may have been damaged when the valve 40A, 40C was inserted into the pocket 54 while the internal-pressure containing features of the seals 42 remain undamaged.

Should the external-pressure containing capabilities of the seals 42 operate improperly; operators will detect that pressure applied in the external test of Figure 8A escapes prematurely. In particular, if the valve 40 being tested in the pocket 54 is a dummy valve 40C (Fig. 3C), then the seals 42 in each direction would be expected to hold roughly identical values of pressure and no other leak path (*i.e*., through the valve's body 41) would be possible.

If the valve 40 in the pocket 54 is a device such as a pressure-operated valve 40A (Fig. 3A) or other valve designed to hold a predetermined pressure from the direction of the annulus to the tubing (*i.e.*, not an open orifice device as in Fig. 3C), then the external pressure test will show that the packing seals 42 are holding pressure up to the pressure value predetermined for the specific application. Thus, for the pressure-operated gas lift valve 40A configured to control pressure, evidence of faulty containment of external pressure can be detected by improper pressure readings on the pressure gauge 72 that deviate from what is expected.

For example, the gas lift valve 40A may be configured for different types of service, continuous flow or intermittent flow, and can provide tubing pressure control. Also, the gas lift valve 40A can be a loaded-type of valve, using bellows, gas charged piston, diaphragm, spring, and other type of loading, which can be expected to operate in a particular fashion under certain pressures. Thus, the valve 40A may have a particular pressure necessary to overcome any internal loading of the valve 40A. Failure to reach that pressure during testing before pressure enters the mandrel 50 can indicate that the external pressure containment has failed.

Any leakage noted during the external pressure test would occur either through the packing seals 42 or through the internal valve mechanism, which has some predetermined pressure containment value. Thus, the external pressure test may not indicate which of the possible leak paths are responsible but will indicate that one part of the assembly is operating incorrectly. In this instance, the valve 40A, 40C can then be removed, examined further, and repaired or replaced before being deployed in the well.

In this way, operators can externally pressure test the interface of the valve 40A, 40C in the pocket 54 without using a large containment chamber. This method of external pressure test is also quicker than the usually applied internal test, but the external test is preferably used in addition to the internal test. This external pressure test can be applied if the ports 56a-b already have check valves 60a-b fitted to them or not, and the test can be applied to any size of pocket or side-pocket mandrel 50.

External testing of the side-pocket mandrel 50 and valve 40A, 40C as described above can be performed in the field and/or in a workshop before the assemblies have been deployed in the well. This can identify the types of problems discussed above and can allow for replacement of the valve 40 or other corrections in the field before running in the well and can avoid issues after deployment.

External pressure testing of any of the gas lift valves 40 disclosed herein may or may not be necessary for a given implementation. However, the external pressure testing disclosed herein can be useful for a gas lift system 10 in a number of ways. In one example, the gas lift system 10 typically uses multiple mandrels 50 and gas lift valves 40 in the well. The uphole valves 40 (such as pressure-operated or other preset valves) are generally "unloading stations" and are only expected to pass the injected gas from annulus to the tubing on a temporary basis.

Problems with the insertion of the latch 45 of one of these uphole valves 40 or with the sealing integrity of the uphole valve's seals 42 can cause the uphole valve 40 to pass the injected gas unexpectedly. If this happens, the premature unloading of the gas leads to very inefficient gas lift, which is very difficult to detect once the mandrels are run in the well. The external pressure testing disclosed herein can be used to detect the problems that cause such premature unloading of the injected gas by the disclosed gas lift valves 40.

### b. Second Form of External Pressure Testing

In the first form of the external pressure test described above, the valve 40 installed in the side-pocket mandrel 50 had some form of pressure containment within the valve 40 in the direction of flow from outside the mandrel 50 to inside the mandrel 50. Not all valves 40 used in the gas lift system 10 may have this functionality. The orifice valve 40B as in Figure 3B is one such valve that does not have pressure containment within the valve 40B. Thus, in a second form of the external pressure test described below, a separate containment mechanism is used during the external pressure testing when the installed valve is an orifice valve 40B or the like.

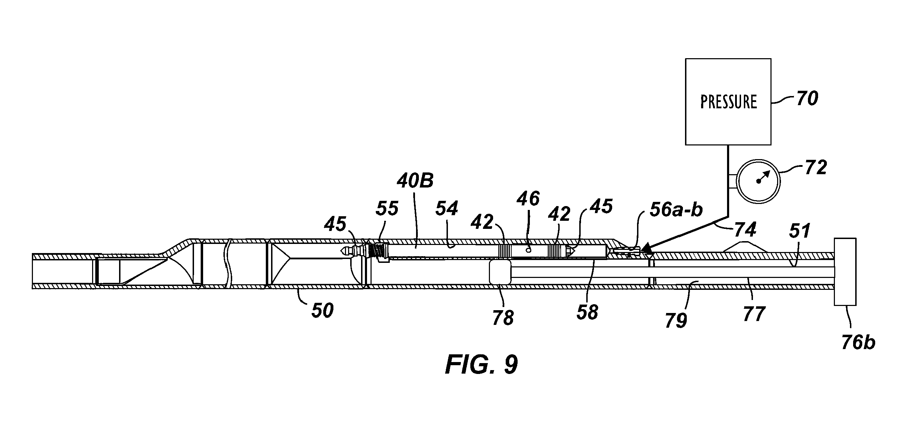

As shown in Figure 9, this second form of the external pressure test can assess the installation of an orifice valve 40B like that of Figure 3B and can assess the seal integrity of at least the upper packing seal 42 on the orifice valve 40B. A packing device 78 is placed inside the bore 51 of the side-pocket mandrel 50 adjacent the pocket 54. The packing device 78 can be an expandable packer or the like and can be connected to an end plug 76b by a connector 77.

With the packing device 78 inside the bore 51, the device 78 effectively separates the upper and lower ends of the pocket 54 from one another. With the plug 76b placed in the thread of the lower end of the mandrel 50, the packing device 78 and plug 76b form a chamber 79 which communicates with the slots 58 in the pockets 54 lower end.

To conduct the test, operators apply pressure from a pressure source 70 through the pressure test line 74 to test the setting of the orifice valve 40B in the mandrel's pocket 54. Pressure from the external test line 74 passes through the orifice valve 40B, out its outlet ports 48, through the pocket's slots 58, and into the enclosed chamber 77. Accordingly, the applied pressure during the external pressure test acts against this enclosed chamber 77.

Since the orifice valve 40B is not expected to restrict the flow of injected gas, external pressure testing of the orifice valve 40B may not be necessary, although it may be useful in some applications as disclosed herein. For example, the external pressure testing can determine whether the latch 45 is properly set so that the correct insertion of the latch 45 can be verified. Moreover, the test can at least indicate that the upper seal 42 can contain external pressure. While it would be desirable to prove that the lower seal 42 of the orifice valve 40B is good, any leak of the valve's seals from the annulus to the tubing may have a much less significant effect on gas lift efficiency. In particular, any leak of the lower seals 42 is right at the typical point of flow from the annulus to the tubing in a continuous gas lift application so that such a leak may have a less than significant effect, especially compared to the same form of leak when a pressure-operated valve 40A or dummy valve 40C is used.

### 3. Additional Mandrel Configurations

The mandrel 50 discussed above is suited for the external pressure testing because it includes threaded openings for the inlet ports 56a-b to receive the check valves 60, which may or may not be used. Likewise, the area 53 for the threaded inlet ports 56a-b is reinforced and well arranged. As such, the threaded inlet ports 56a-b can receive a plug 75b and a fitting 75a for the external pressure test as shown in Figure 8B. However, other types of mandrels 50 can be used for the external pressure testing according to the present disclosure.

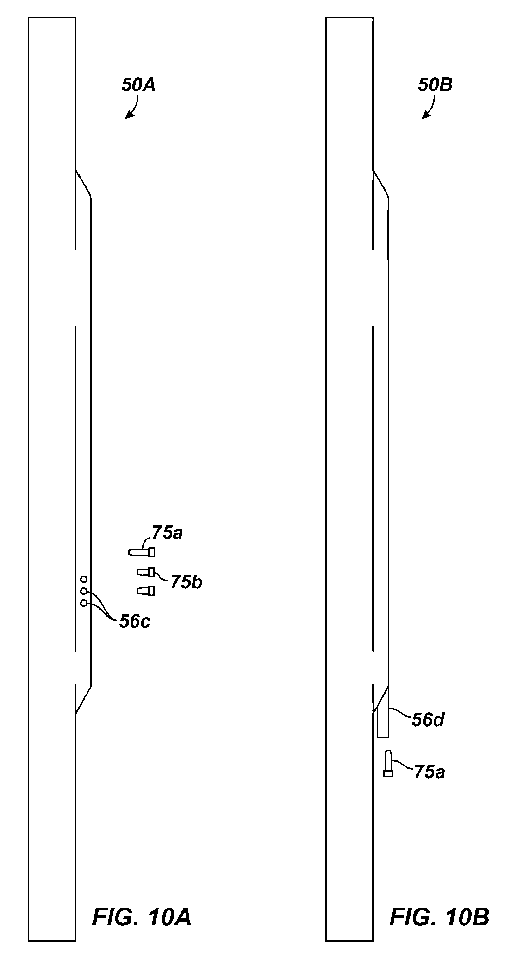

As shown in Figure 10A, for example, a side-pocket mandrel 50A is shown having side ports 56c as is commonly used. For this mandrel 50A, the various ports 56c can have internal threads formed therein. For the external pressure testing, the ports 56c can receive threaded plugs 75b to close them off. At least one of the ports 56c, however, can receive a fitting 75a for connecting the pressure test line (74) for the external pressure test disclosed above with reference to Figures 8A and 9.

As shown in Figure 10B, another side-pocket mandrel 50B has a similar flow configuration through one or more ports 56d disposed at an end of the bulge for the side-pocket, which is similar to the mandrel disclosed above in Figures 5A-5B. In this mandrel 50B, the port 56d is not strictly designed to receive an external check valve as with the mandrel discussed above. Yet, this port 56d is threaded for external pressure testing as proposed above in Figures 8A and 9 so that the pressure test line (74) can connected to the port 56d. Otherwise, the port can be used as a conventional port during gas lift operations.

As will be appreciated with the benefit of the present disclosure, these and other configurations of side-pocket mandrels can be used for the external pressure testing disclosed above. Moreover, other types of mandrels for gas lift valves can also benefit from the disclosed techniques.

### 4. Gas Lift Operation

Once pressure testing is completed, the system 10 of Figure 4 is installed in the wellbore. Any number of deployments can be used to install the gas lift valves 40 in the side-pocket mandrels 50. For example, the mandrels 50 may be installed initially with dummy valves (not shown) installed. Then, when gas lift is needed, wireline operations can remove the dummy valves and install the gas lift valves 40. Alternatively, the gas lift valves 40 may be deployed already installed in the mandrels 50.

Regardless, once the system 10 is ready, the system 10 can undergo any necessary internal and external pressure testing so it can then be used for gas lift operations. In these operations, compressed gas G from the wellhead 12 is injected into the annulus 16 between the production tubing string 20 and the casing 14. In the side-pocket mandrels 50, the gas lift valves 40 then act as one-way valves by allowing gas flow from the annulus 16 to the tubing string 20 and preventing gas flow from the tubing string 20 to the annulus 16. Downhole, the production packer 22 forces produced fluid entering casing perforations 15 from the formation to travel up through the tubing string 20, and the packer 22 keeps the gas flow in the annulus 16 from entering the tubing string 20.

The injected gas G passes down the annulus 16 until it reaches the side-pocket mandrels 50. The injected gas G can flow through the check valves 60 (if present), continue through separate flow paths in the ports 56a-b and passage 57a, and then flow from the transverse passages 57b toward the inlet ports 46 of the gas lift valve 40. In turn, the gas lift valve 40 allows the gas G to flow downward within the valve 40, through the check dart 44, and eventually flow out through outlet ports 48 and into the side pocket 54. From there, the gas G flows out through the slot 58 in the pocket 54 and into the production tubing string 20 connected to the mandrel's main passage 51.

Here, the inlet ports 56a-b have the check valve 60, although this is not strictly necessary for a given implementation. During the gas lift operation, upstream pressure typically from the surrounding annulus acts against the check valve 60 and is higher than the downstream pressure from the tubing string 20. The pressure differential depresses the spring-loaded dart 65 in the valve 60, allowing injection gas to flow through the check valve 60 and into the tubing string 20. If the downstream pressure is greater than the upstream pressure, flow across the check dart 65 forces the dart 65 against the seat 66, which prevents backflow.

Because the gas lift valve 40 and the separate check valves 60 both prevent fluid flow from the tubing string 20 into the annulus 16, they can act as redundant backups to one another. Moreover, the check valves 60 allow the gas lift valve 40 to be removed from the mandrel 50 for repair or replacement, while still preventing flow from the tubing string 20 to the annulus 16. This can improve gas lift operations by eliminating the time and cost required to unload production fluid from the annulus 16 as typically encountered when gas lift valves are removed and replaced in conventional mandrels.

The foregoing description of preferred and other embodiments is not intended to limit or restrict the scope or applicability of the inventive concepts conceived of by the Applicants. In exchange for disclosing the inventive concepts contained herein, the Applicants desire all patent rights afforded by the appended claims. Therefore, it is intended that the appended claims include all modifications and alterations to the full extent that they come within the scope of the following claims or the equivalents thereof.

## Claims

1. A method of pressure testing a gas lift valve in a mandrel, the gas lift valve having at least one external seal disposed thereon, the mandrel having a bore therethrough from one end to another, the bore having a pocket disposed therein for holding the gas lift valve, the mandrel having at least one external port communicating the pocket outside the mandrel, the method comprising:
installing the gas lift valve in the pocket of the mandrel to engage the at least one external seal of the gas lift valve in the pocket;
connecting a first pressure source to the at least one external port on the mandrel;
applying first pressure from the first pressure source to the at least one external port; and
testing the engagement of the at least one external seal in the pocket by monitoring the application of the first pressure from the first pressure source.

2. The method of claim 1, wherein installing the gas lift valve in the pocket of the mandrel comprises latching the gas lift valve in the pocket.

3. The method of claim 2, further comprising testing the latching of the gas lift valve in the pocket when applying the first pressure from the first pressure source to the at least one external port.

4. The method of claim 1, 2 or 3, the gas lift valve having an inlet and an outlet, the mandrel having a passage communicating the pocket with the bore, wherein installing the gas lift valve in the pocket of the mandrel comprises:
communicating the inlet on the gas lift valve with the at least one external port on the mandrel; and
communicating the outlet on the gas lift valve with the passage in the mandrel communicating the pocket with the bore.

5. The method of claim 4,
the gas lift valve having an internal pressure mechanism controlling communication from the inlet to the outlet,
further comprising testing the internal pressure mechanism in the gas lift valve by monitoring the application of the first pressure from the first pressure source; and
optionally wherein testing the internal pressure mechanism occurs at a first level of the first pressure and testing the engagement of the at least one external seal occurs at a second level different from the first level.

6. The method of claim 4 or 5,
further comprising sealing any of the first pressure communicated from the outlet of the gas lift valve within the bore of the mandrel; and
optionally wherein sealing any of the first pressure communicated from the outlet of the gas lift valve within the bore of the mandrel comprises sealing the bore of the mandrel on both sides of the passage between the pocket and the bore.

7. The method of any preceding claim, further comprising:
sealing the bore towards both ends of the mandrel;
connecting a second pressure source to the bore of the mandrel;
applying second pressure from the second pressure source to the bore; and
testing the engagement of the at least one external seal in the pocket by monitoring the application of the second pressure from the second pressure source; and
optionally wherein:
applying the second pressure is performed before or after applying the first pressure; or
the first and second pressure sources are the same.

8. The method of any preceding claim,
wherein connecting the first pressure source to the at least one external port on the mandrel comprises threading a fitting in the at least one external port; or
wherein monitoring the application of the first pressure from the first pressure source comprises monitoring a pressure gauge associated with the first pressure source; or
wherein the first pressure source comprises a source of pressurized water, gas, or oil.

9. The method of any preceding claim, further comprising plugging one or more other of the at least one external port on the mandrel; and optionally wherein plugging the one or more other external ports on the mandrel comprises threading one or more plugs in the one or more other external ports.

10. The method of any preceding claim, wherein the steps of installing, connecting, applying, and testing are performed at a wellsite; and optionally wherein the method further comprises:
maintaining the gas lift valve installed in the mandrel after testing; and
installing the mandrel with the gas lift valve in a well at the wellsite.

11. A pressure testing system for a gas lift valve installed in a mandrel, the mandrel having a bore therethrough from one end to another and having a pocket disposed in the bore for holding the gas lift valve, the mandrel having at least one external port communicating the pocket outside the mandrel, the gas lift valve having at least one external seal engaging in the pocket, the system comprising:
a first pressure source connecting to the at least one external port on the mandrel and applying first pressure thereto; and
a pressure monitor associated with the first pressure source and monitoring the application of the first pressure to the at least one external port,
wherein the application of the first pressure at least tests the engagement of the at least one external seal in the pocket.

12. The system of claim 11, the gas lift valve latching in the pocket, wherein the application of the first pressure tests the latching of the gas lift valve in the pocket.

13. The system of claim 11 or 12, the gas lift valve having an internal pressure mechanism controlling communication of an inlet with an outlet of the gas lift valve, the inlet communicating with the at least one external port, the outlet communicating with a passage in the mandrel, the passage communicating the pocket with the bore,
wherein the application of the first pressure tests the internal pressure mechanism in the gas lift valve; and
optionally wherein: testing the internal pressure mechanism occurs at a first level of the first pressure and testing the at least one external seal occurs at a second level different from the first level; or
the system further comprises first and second seals sealing the bore of the mandrel on both sides of the passage between the pocket and the bore.

14. The system of claim 11, 12 or 13, further comprising:
first and second seals sealing the bore towards both ends of the mandrel;
a second pressure source applying second pressure to the bore; and
wherein the application of the second pressure at least tests the engagement of the at least one external seal in the pocket; and
optionally wherein:
the second pressure is applied before or after applying the first pressure; or
the first and second pressure sources are the same pressure source.

15. The method of claim 11, 12, 13 or 14,
further comprising a fitting threading in the at least one external port and connecting the first pressure source thereto; or further comprising one or more plugs threading in one or more other of the at least one external port on the mandrel; or wherein the pressure monitor comprises a pressure gauge associated with the first pressure source; or
wherein the first pressure source comprises a source of pressurized water, gas, or oil.
